# EUROPEAN PATENT SPECIFICATION

(11) **EP 4 254 779 B1**
(45) Date of publication and mention of the grant of the patent: **21.10.2026**
(21) Application number: 23153519.6
(22) Date of filing: 26.01.2023
(51) Int. Cl.: H02P 27/08, H02P 21/00

(54) **OPERATION CONTROL SYSTEM AND AIR CONDITIONER, OPERATION CONTROL METHOD, AND OPERATION CONTROL PROGRAM**
BETRIEBSSTEUERUNGSSYSTEM UND KLIMAANLAGE, BETRIEBSSTEUERUNGSVERFAHREN UND BETRIEBSSTEUERUNGSPROGRAMM
SYSTÈME DE COMMANDE DE FONCTIONNEMENT ET CLIMATISEUR, PROCÉDÉ DE COMMANDE DE FONCTIONNEMENT ET PROGRAMME DE COMMANDE DE FONCTIONNEMENT

(30) Priority: 29.03.2022 JP 2022053761
(43) Date of publication of application: 04.10.2023
(73) Proprietor: Mitsubishi Heavy Industries Thermal Systems, Ltd., Tokyo, 100-8332 (JP)
(72) Inventor: YOSHIDA, Junichi, TOKYO, 100-8332 (JP); SUNOHARA, Tetsu, TOKYO, 100-8332 (JP); SHIMIZU, Kenji, TOKYO, 100-8332 (JP); SERIZAWA, Kazuhiko, TOKYO, 100-8332 (JP); SUMITO, Kiyotaka, TOKYO, 100-8332 (JP)
(74) Representative: Cabinet Beau de Loménie

(56) References cited:
- EP-A1- 3 379 718
- EP-A1- 3 382 870
- EP-A1- 3 416 280
- EP-A1- 3 416 281

## Description

### Technical Field

The present disclosure relates to an operation control system and an air conditioner, an operation control method, and an operation control program.

### Background Art

An air conditioner is primarily equipped with an inverter device that generates AC power for load (motor) drive to freely drive a motor of a compressor. An inverter device is well-known, which converts a three-phase AC voltage input from a commercial power supply (e.g., AC 200 V three-phase AC power supply) into a DC voltage once through a rectifier circuit (converter), and then converts the DC power into desired AC power for motor drive by the inverter device. As such inverter devices, those that perform output control by the v/f control method and those that perform output control by the vector control method are known.

In Patent Document 1, in order to reduce switching loss in the inverter device, a PWM-controlled pulse signal is stopped for a certain period (mask period) (partial two-phase current control). Partial two-phase current control is also disclosed in Patent Documents 2 and 3. Other prior art documents are EP 3 416 280 A1, which discloses the features of the preamble of claims 1, 7 and 8, and further EP 3 416 281 A1, EP 3 379 718 A1 and EP 3 382 870 A1.

### Citation List

### Patent Literature

Patent Document 1: JP 2018-164347 A
Patent Document 2: JP 2019-4616 A
Patent Document 3: JP 2019-4617 A

### Summary of Invention

### Technical Problem

However, in performing partial two-phase current control, when a mask period is provided, control of the switching element suddenly stops and starts, which may distort the three-phase AC voltage waveform supplied to the motor and affect the motor's torque (whereby torque shock or the like occurs). In such a case, abnormal conditions such as vibration, noise or step-out may occur and stable operation of the motor may be degraded.

In view of these circumstances, an object of the present disclosure is to provide an operation control system and an air conditioner, an operation control method, and an operation control program that can reduce loss and improve operation stability for motor.

### Solution to Problem

A first aspect of the present invention is an operation control system, which includes:
a voltage command unit configured to generate sine wave voltage commands on the basis of a speed command for an AC motor;
a command generation unit configured to, by using a predetermined angular range that includes an electrical angle at which the amplitude in the voltage commands is zero as a mask period, generate a command to:
   generate a PWM signal for the AC motor on the basis of the voltage commands during periods other than the mask period; and
   generate, when the mask period is divided into a former-stage period and a latter-stage period, an additional pulse in at least one of the former-stage period and the latter-stage period; and
   a pulse generation unit configured to generate a pulse signal for a switching element that drives the AC motor on the basis of the command.

With the operation control system according to the present invention, in the voltage commands on the basis of the speed command for the AC motor, the mask range is the angular range including the electrical angle at which the voltage becomes 0 (i.e., near the zero crossing). During periods other than the mask period, the PWM signal is generated on the basis of the voltage commands, and during the mask period, the additional pulse is generated in at least one of the former-stage period and the latter-stage period. This allows the switching loss to be reduced by setting the mask period, and allows the waveform distortion to be reduced during the mask period to suppress torque shock because additional pulse is generated in the former-stage period and/or the latter-stage period. That is, the torque for the motor required during the mask period can be supplemented by the additional pulse, and the motor can be smoothly driven. For example, by generating the additional pulse in the former-stage period, motor torque at the timing of switching to the mask period can be supplemented, and by generating the additional pulse in the latter-stage period, motor torque at the timing of switching from the mask period can be supplemented. This is expected to reduce vibration, noise, and step-out.

In an example embodiment of the operation control system according to the present invention,
the command generation unit may be configured to generate the command in a manner to generate a PWM signal whose amplitude is made zero in the mask period on the basis of the voltage commands, and then generate the additional pulse in the mask period.

With the operation control system according to the present invention, the additional pulse can be efficiently generated during the mask period by generating the PWM signal whose amplitude is made zero during the mask period on the basis of the voltage commands and thereafter generating the additional pulse during the mask period.

In an example embodiment of the operation control system according to the present invention, during the mask period,
one or more of the additional pulses may be generated, and the sum of the pulse widths of the additional pulses may be greater than the pulse width of the PWM signal before or after the mask period.

With the operation control system according to the present invention, by making the sum of the pulse widths of the additional pulses AP larger than the pulse width of the PWM signal before or after the mask period, the shortage of the motor torque during the mask period can be effectively compensated.

In an example embodiment of the operation control system according to the present invention,
the sum of the pulse widths of the additional pulses may be equal to the sum of the widths of the respective pulses of the PWM signals formed during the mask period on the basis of the voltage commands.

With the operation control system according to the present invention, by making the sum of the pulse widths of the additional pulses equal to the sum of the widths of the respective pulses of the PWM signals formed during the mask period on the basis of the voltage commands, the shortage of motor torque during the mask period can be effectively compensated.

In an example embodiment of the operation control system according to the present invention,
when the sum of the pulse widths of the additional pulses in the mask period exceeds a predetermined upper limit width, the command generation unit may be configured to generate the command in a manner to divide the value of the sum to generate multiple additional pulses in the mask period.

With the operation control system according to the present invention, when the sum of the pulse widths of the additional pulses AP exceeds a predetermined upper limit width (e.g., duty 100%), the motor can be smoothly rotated using the mask period as one carrier frequency by dividing the sum to generate multiple additional pulses.

A second aspect of the present invention is an operation control method, which includes:
generating sine wave voltage commands on the basis of a speed command for an AC motor;
generating, by using a predetermined angular range that includes an electrical angle at which the amplitude in the voltage command is zero as a mask period, a command to:
   generate a PWM signal for the AC motor on the basis of the voltage commands during periods other than the mask period; and
   generate, when the mask period is divided into a former-stage period and a latter-stage period, an additional pulse in at least one of the former-stage period and the latter-stage period; and
   generating a pulse signal for a switching element that drives the AC motor on the basis of the command.

A third aspect of the present invention is an operation control program configured to cause a computer to execute:
a process of generating sine wave voltage commands on the basis of a speed command for the AC motor;
a process of generating, by using a predetermined angular range that includes an electrical angle at which the amplitude in the voltage command is zero as a mask period, a command to:
   generate a PWM signal for the AC motor on the basis of the voltage commands during periods other than the mask period; and
   generate, when the mask period is divided into a former-stage period and a latter-stage period, an additional pulse in at least one of the former-stage period and the latter-stage period. The invention is defined by the device of claim 1, method of claim 7 and computer-program product of claim 8. Preferred embodiments of invention are disclosed in dependent claims 2-6.

### Advantageous Effects of Invention

According to the present disclosure, the effect of reducing loss and improving operation stability for a motor is achieved.

### Brief Description of Drawings

FIG. 1 is an overall view of an inverter device according to an embodiment of the present disclosure.
FIG. 2 is a diagram illustrating a functional configuration of a control device according to an embodiment of the present disclosure.
FIG. 3 is a diagram illustrating an example of a PWM signal according to an embodiment of the present disclosure.
FIG. 4 is a diagram illustrating a waveform in a reference example.
FIG. 5 is a diagram illustrating an example of generating an additional pulse in a case (1) according to an embodiment of the present disclosure.
FIG. 6 is a diagram illustrating an example of generating an additional pulse in a case (2) according to an embodiment of the present disclosure.
FIG. 7 is a diagram illustrating an example of generating an additional pulse in another case according to an embodiment of the present disclosure.
FIG. 8 is a flow chart illustrating an example of a procedure for PWM signal generation processing according to an embodiment of the present disclosure.
FIG. 9 is a diagram illustrating an example of a hardware configuration of a control device according to an embodiment of the present disclosure.

### Description of Embodiments

Hereinafter, an embodiment of an operation control system and an air conditioner, an operation control method, and an operation control program according to the present disclosure will be described with reference to the drawings.

### Circuit Configuration of Inverter Device

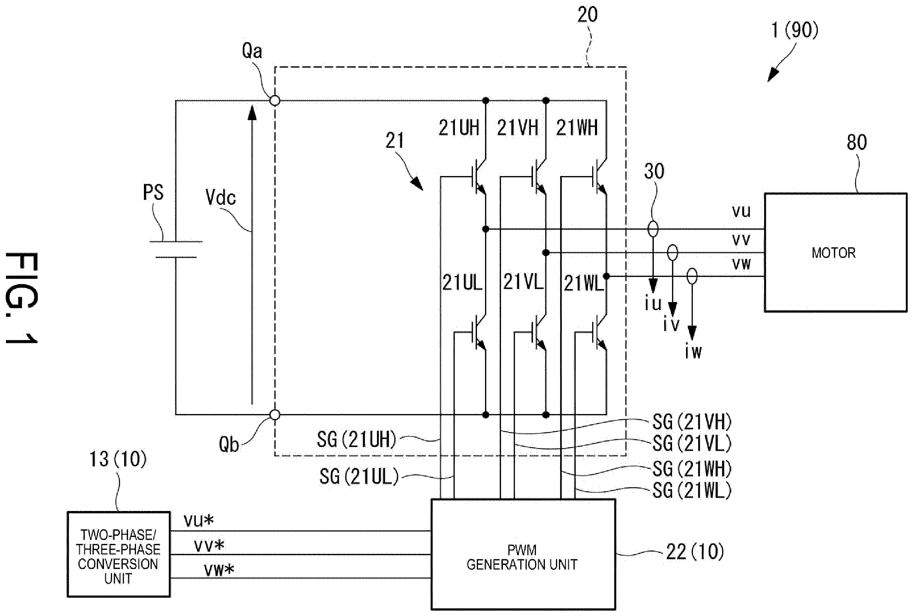

FIG. 1 is a diagram illustrating a circuit configuration of an inverter device according to an embodiment.

An inverter device 1 is installed in an outdoor unit of an air conditioner 90. The inverter device 1 outputs, to a three-phase AC motor (motor 80) for driving the compressor of the above-described outdoor unit, an AC voltage (three-phase AC voltage) for load driving in accordance with a separately input speed command. Although a three-phase AC motor is illustrated and described in the present embodiment, a wide range of AC motors can be applied. The inverter device 1 rotationally drives the three-phase AC motor (motor 80), that is, the load at a desired rotational speed on the basis of the AC voltage for load driving.

The inverter device 1 includes a control device 10, an inverter main circuit 20, and a motor current detecting unit 30.

The inverter device 1 converts a DC voltage Vdc supplied by a DC power supply PS into a three-phase AC voltage consisting of a U-phase AC voltage, a V-phase AC voltage, and a W-phase AC voltage, which are AC voltages for load driving to rotationally drive the motor 80.

The motor current detecting unit 30 is provided on each of the wiring lines for the three phases connected from the inverter device 1 to the motor 80. The motor current detecting unit 30 detects currents iu, iv, and iw of the U-phase, the V-phase, and the W-phase flowing through the motor 80 in relation to the three-phase applied voltage (AC voltage vu, vv, vw) output from the inverter device 1 to the motor 80, respectively, and notifies the control device 10 of the detection result of each current iu, iv, and iw.

### Inverter Main Circuit

The inverter main circuit 20 includes a switching element group 21, a positive electrode DC terminal Qa, and a negative electrode DC terminal Qb.

The positive electrode DC terminal Qa and the negative electrode DC terminal Qb are terminals to which the DC voltage Vdc is input.

The positive electrode DC terminal Qa and the negative electrode DC terminal Qb are connected to the positive and negative electrodes of the DC power supply PS, respectively.

The switching element group 21 includes three pairs of two switching elements connected in series between the DC voltage Vdc. The switching element is, for example, a power transistor such as an Insulated Gate Bipolar Transistor (IGBT). Each pair of the above series-connected switching elements is provided corresponding to each of the three phases for rotationally driving the three-phase AC motor (motor 80).

As illustrated in FIG. 1, the switching element group 21 includes a pair of an upper arm switching element 21UH and a lower arm switching element 21UL connected in series, from the positive electrode DC terminal Qa to the negative electrode DC terminal Qb into which DC voltage Vdc is input.

Furthermore, the switching element group 21 includes a pair of an upper arm switching element 21VH and a lower arm switching element 21VL connected in series from the positive electrode DC terminal Qa to the negative electrode DC terminal Qb.

Furthermore, the switching element group 21 includes a pair of an upper arm switching element 21WH and a lower arm switching element 21WL connected in series from the positive electrode DC terminal Qa to the negative electrode DC terminal Qb.

The pair of the upper arm switching element 21UH and the lower arm switching element 21UL are switched by a gate signal from a PWM generation unit 22 (described later) to generate an AC voltage vu in a U-phase. The pair of the upper arm switching element 21UH and the lower arm switching element 21UL are alternately switched in a region excluding a peak voltage region RGP and a zero voltage region RGZ.

Similarly, the pair of the upper arm switching element 21VH and the lower arm switching element 21VL are switched by the gate signal from the PWM generation unit 22 to generate an AC voltage vv in a V-phase. The pair of the upper arm switching element 21VH and the lower arm switching element 21VL are alternately switched in the region excluding the peak voltage region RGP and the zero voltage region RGZ.

Similarly, the pair of the upper arm switching element 21WH and the lower arm switching element 21WL are switched by the gate signal from the PWM generation unit 22 to generate an AC voltage vw in a W-phase. The pair of the upper arm switching element 21WH and the lower arm switching element 21WL are alternately switched in the region excluding the peak voltage region RGP and the zero voltage region RGZ.

The PWM generation unit 22 generates a gate signal (PWM signal) to drive the switching element group 21 and turn the switching element group 21 on and off, in relation to a command (described later) received from a two-phase/three-phase conversion unit 13, which is provided in the control device 10.

In the present embodiment, the PWM generation unit 22 acquires AC voltage commands vu*, vv*, vw*. The PWM generation unit 22 generates a PWM-controlled pulse signal (hereinafter also referred to as "PWM signal") with a duty rate proportional to the voltage of each waveform at each timing of the acquired AC voltage commands vu*, vv* and vw*.

Specifically, the PWM generation unit 22 outputs a gate signal SG (21UH), a gate signal SG (21UL), a gate signal SG (21VH), a gate signal SG (21VL), a gate signal SG (21WH), and a gate signal SG (21WL) to the gates of the switching element 21UH, the switching element 21UL, the switching element 21VH, the switching element 21VL, the switching element 21WH, and the switching element 21WL, respectively, which will be described later.

The PWM generation unit 22 generates the gate signal SG (21UH) and the gate signal SG (21UL) on the basis of the AC voltage command vu*.

Similarly, the PWM generation unit 22 generates the gate signal SG (21VH) and the gate signal SG (21VL) on the basis of the AC voltage command vv*.

Similarly, the PWM generation unit 22 generates the gate signal SG (21WH) and the gate signal SG (21WL) on the basis of the AC voltage command vw*.

The signals output from the PWM generation unit 22 are corrected as described below at a mask period generation unit 61 and a pulse addition unit 62, which will be described later.

### Control Device

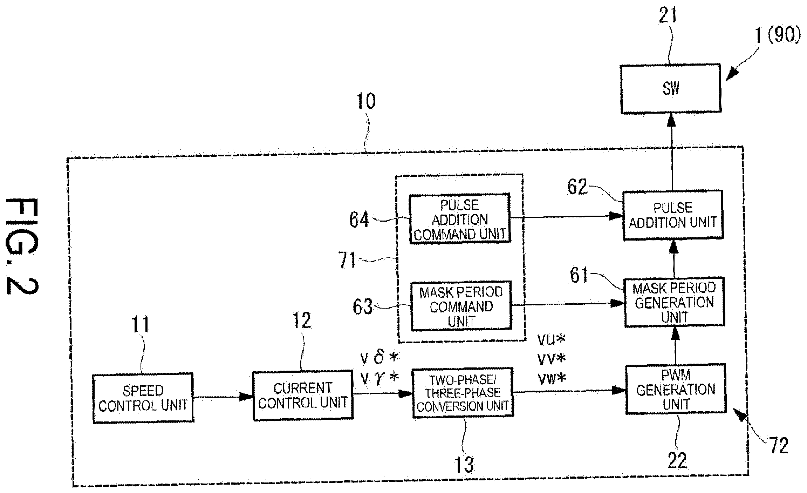

As illustrated in FIG. 2, the control device 10 is functionally provided with a speed control unit 11, a current control unit 12, a two-phase/three-phase conversion unit 13, the PWM generation unit 22, and a command generation unit 71. During periods other than the mask period, the command generation unit 71 generates a command to generate a PWM signal on the basis of the voltage commands and generates an additional pulse during the mask period. The command generation unit 71 includes a mask period command unit 63 and a pulse addition command unit 64. Note that, the PWM generation unit 22, the mask period generation unit 61, and the pulse addition unit 62 constitute a pulse generation unit 72.

In the present embodiment, a computer system functions as the control device 10 by executing a program described later.

The speed control unit 11 outputs a speed command for rotating the motor 80 at a desired rotational speed ω.

The current control unit 12 receives input of a speed command from the speed control unit 11 and generates voltage commands on two axes (delta and gamma axes) of a rotating rectangular coordinate system on the basis of the current iu, iv, and iw detected at the motor current detecting unit 30. For example, the current control unit 12 generates and outputs a δ axis voltage command and a γ axis voltage command as voltage commands.

The two-phase/three-phase conversion unit 13 performs coordinate conversion on the voltage command output from the current control unit 12 to AC voltage commands vu*, vv*, and vw* corresponding to each of the AC voltages of the three phases. In this way, with the current control unit 12 and the two-phase/three-phase conversion unit 13, a (similar) sine wave corresponding to each of the desired three-phase AC is output, and sine wave voltage commands are generated based on the speed command of the AC motor.

Thus, when the voltage command is acquired, a PWM signal is generated at the PWM generation unit 22 by comparing the voltage command with the voltage waveform of a reference triangular wave (or saw-shaped wave). When the PWM signal is generated on the basis of a desired sine wave voltage command, it can be used without being limited to the above configuration.

Note that when the AC voltage commands vu*, vv*, and vw* are each sine waves and the inverter device 1 performs PWM control with no change to the sine waves, switching loss in the switching element group 21 may be large. Thus, it is preferable to perform two-arm type control. The two-arm type control is control of turning on each switching element for a predetermined period of time. Specifically, in a large region (peak voltage region RGP) of (the absolute value of) each phase voltage of the three-phase AC voltage, the upper arm switching elements 21UH, 21VH, 21WH, and the lower arm switching elements 21UL, 21VL, 21WL are turned on (continuously-on) over all the multi-period regions of the PWM period.

### Pulse Signal Stop Control

The control device 10 includes the mask period command unit 63 in order to reduce switching losses. The mask period (zero voltage region RGZ) is a period when the duty cycle is 0% (continuously-off) and all regions in the period have an off-signal (no pulse). In other words, PWM signals are stopped during the mask period. The mask period is set as a predetermined angular range that includes an electrical angle at which the amplitude in the voltage commands (AC voltage commands vu*, vv*, vw*) is zero. The angular range is, for example, 60 degrees. The mask period command unit 63 corrects the PWM signal such that the mask period is formed in a preset angular range. Specifically, the mask period command unit 63 outputs a command to a mask period generation unit 61 to correct the PWM signal generated at the PWM generation unit 22.

The formation method of the mask period is not limited to the above method provided that the mask period can be formed.

Multiple pulses during the mask period are removed by the mask period command unit 63. This suppresses switching losses. For example, in the U-phase, the current iu is kept in a state of substantially not flowing in all regions during the mask period. On the other hand, because the other phases are deviated from each other, the current iv of the V-phase and the current iw of the W-phase flow even during the mask period of the U-phase. That is, since the currents in these two phases partially flow, control that stops the current of a specific phase using a mask period (while currents in the other two phases flow) is called partial two-phase current control. In other words, the partial two-phase current control is control of, when generating PWM signals on the basis of the voltage commands vu*, vv*, and vw*, stopping the pulse of any one phase during the mask period.

### Correction of Mask Period

As described above, partial two-phase current control is possible. However, during the mask period, the PWM control suddenly stops and starts. In the mask period, since the PWM signal is stopped, motor torque may be insufficient and the waveform may be distorted. This can cause phenomena such as vibration, noise, or step-out.

To deal with this, as illustrated in FIG. 2, the control device 10 is provided with the pulse addition command unit 64. That is, the control device 10 and the PWM generation unit 22 constitute an operation control system that generates PWM signals for operation control. The pulse addition command unit 64 outputs a command to the pulse addition unit 62 to correct the PWM signal corrected by the mask period generation unit 61.

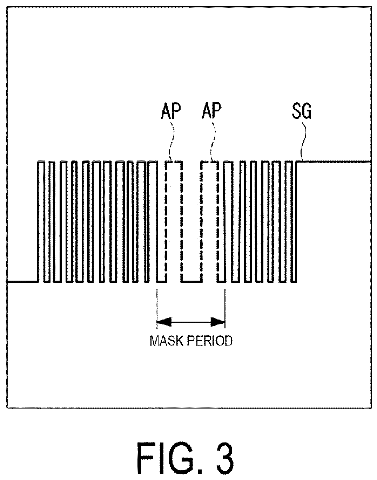

For example, as illustrated in FIG. 3, a signal including an additional pulse AP generated during the mask period is output as a gate signal. Thus, during periods other than the mask period, PWM signals are generated on the basis of the voltage commands vu*, vv*, and vw*, and during the mask period, an additional pulse AP is generated not on the basis of the voltage commands vu*, vv*, and vw*. That is, the additional pulse AP is formed by the pulse addition command unit 64 during the mask period in which pulses are not generally formed. No pulse other than the additional pulse AP is formed during the mask period. The number of the additional pulses AP formed during the mask period is smaller than the number of PWM pulses that would have been formed during the mask period on the basis of the voltage commands vu*, vv*, and vw*.

### Specific Example of Additional Pulse

Next, a specific example of the additional pulse AP in the mask period is described.

When the mask period is short, generated torque shock is considered to be small. Specifically, when the mask period is less than +/- 5 deg (i.e., less than 10 degs), the generated torque shock is minor and the additional pulse AP may be unnecessary. When the mask period is long, for example, +/- 20 deg (i.e., 40 deg ), the disturbance of the generated current waveform becomes large, which causes step-out and vibration.

For this reason, the additional pulse AP is preferably generated during the mask period when the mask period is +/-5 deg or greater.

During the mask period, when the mask period is divided into a former-stage period and a latter-stage period, the additional pulse AP is generated during at least one of the former-stage period and the latter-stage period. The former-stage period is a former-stage of the mask period, including a start point of the mask period, and the latter-stage period is a latter-stage of the mask period, including an end point of the mask period. The former-stage period and the latter-stage period may be separated by a predetermined timing (e.g., the center) in the mask period or by an intermediate period including the center period in the mask period. In the present embodiment, a case where the mask period is divided into a former-stage period and a latter-stage period with the center of the mask period as a boundary, will be described as an example.

Providing the additional pulse AP in the former-stage period makes it possible to suppress the torque shock generated because of the stop of PWM control due to the start of the mask period. Providing the additional pulse AP in the latter-stage period makes it possible to suppress the torque shock generated because of the start of PWM control (start from stop) due to the end of the mask period.

That is, there are two cases in which the additional pulse AP is generated. (1) The additional pulse AP is generated during the former-stage period and not generated during the latter-stage period. (2) The additional pulse AP is generated during the former-stage period and during the latter-stage period.

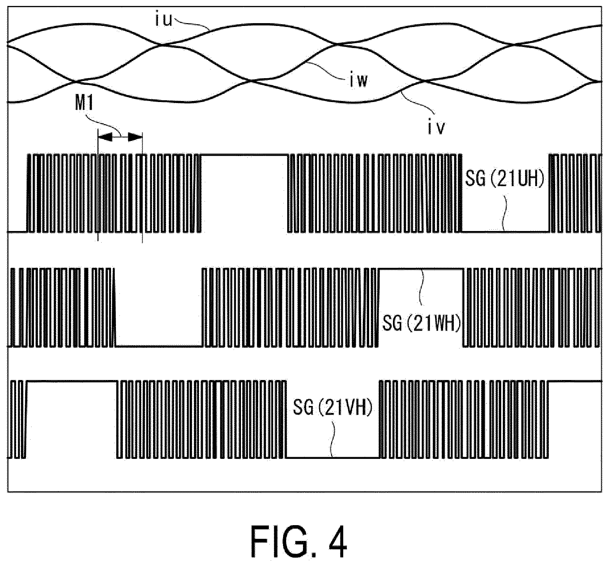

FIG. 4 illustrates a waveform without a mask period, as a reference example. In FIG. 4, for example, the period of M1 corresponds to the mask period.

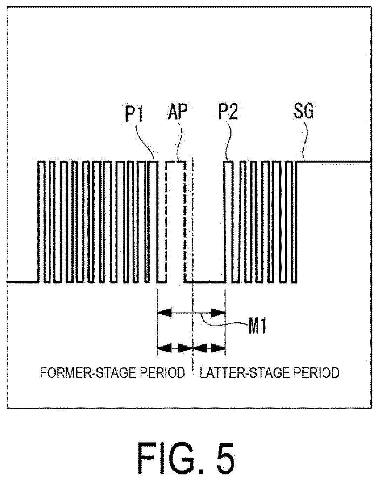

FIG. 5 illustrates an example of the case (1). In FIG. 5, the horizontal axis represents a phase θ and the vertical axis represents voltage. FIG. 5 illustrates a case where the additional pulse AP is generated during the mask period M1 in the reference example of FIG. 4. As illustrated in FIG. 5, the additional pulse AP is generated during the former-stage period of the mask period and not generated during the latter-stage period.

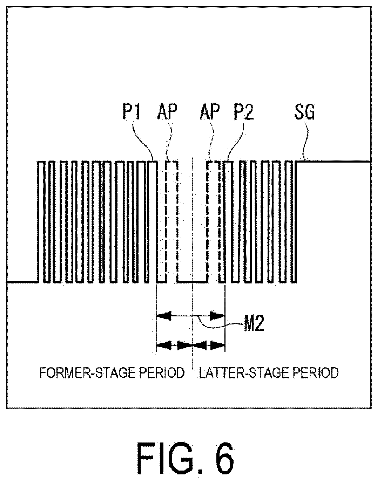

FIG. 6 illustrates an example of the case (2). In FIG. 6, the horizontal axis represents the phase θ and the vertical axis represents voltage. FIG. 6 illustrates a case where the additional pulses AP are generated during the mask period of M1 in the reference example of FIG. 4. As illustrated in FIG. 6, additional pulses AP are generated during both the former-stage period and the latter-stage period of the mask period, respectively.

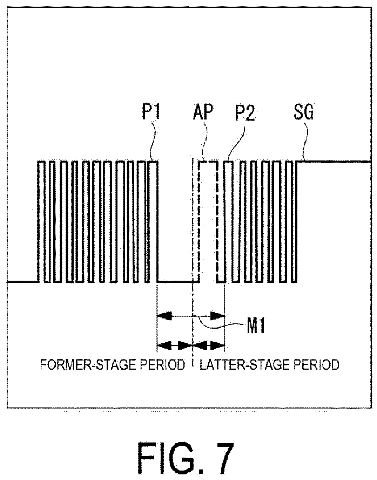

Another case in which the additional pulse AP is not generated during the former-stage period and is generated during the latter-stage period may also occur. FIG. 7 illustrates an example of this case. In FIG. 7, the horizontal axis represents the phase θ and the vertical axis represents voltage. FIG. 7 illustrates a case where the additional pulse AP is generated during the mask period M1 in the reference example of FIG. 4. As illustrated in FIG. 7, the additional pulse AP is not generated during the former-stage period of the mask period and is generated during the latter-stage period. From the viewpoint of vibration suppression, cases (1) and (2) are more preferable as generation cases of the additional pulse AP.

Note that when the additional pulse AP is generated during the former-stage period, the additional pulse AP is preferably generated in a manner to approach the start point of the mask period. For example, after the start of the mask period, generation processing is performed such that the additional pulse AP is generated at the initial pulse rise timing during the PWM cycle. When the additional pulse AP is generated during the latter-stage period, the additional pulse AP is preferably generated in a manner to approach the end point of the mask period. For example, before the end of the mask period, generation processing is performed such that the additional pulse AP is generated at the last pulse rise timing during the PWM cycle.

Of the several cases described above, the case (2) is more preferable from the viewpoint of effectively reducing torque shock.

During the mask period, one or more of the additional pulses AP may be generated. FIGS. 5 and 7 illustrate a case of generating one additional pulse AP during the mask period, and FIG. 6 illustrates a case of generating two additional pulses AP during the mask period. It is also possible to generate multiple additional pulses AP during the former-stage period or the latter-stage period.

The pulse width of the additional pulse AP generated during the mask period (the total pulse width when multiple additional pulses AP are generated) is set wider than the pulse width of the PWM signal before or after the mask period to compensate for torque during the mask period. Specifically, the pulse of the PWM signal before or after the mask period is the pulse of the PWM signal immediately before or after the mask period. As illustrated in FIGS. 5, 6 and 7, the sum of the additional pulse widths is greater than the pulse width of either a pulse P1 before the mask period or a pulse P2 after the mask period.

Specifically, the sum of the pulse widths of the additional pulses AP generated during the mask period is equal to the sum of the widths of the individual pulses of the PWM signals formed during the mask period on the basis of the voltage commands vu*, vv*, vw*. In other words, the pulses that would have been generated by PWM control during the mask period are aggregated and added as additional pulses AP. During the period M1 in FIG. 4, it is assumed that P pulses are generated. When the period M1 is assumed as the mask period, it is assumed that these P pulses are not generated. Thus, in FIGS. 5, 6 and 7, the P pulses are aggregated and generated as additional pulses AP during the mask period. Because multiple pulses are aggregated, the sum of the pulse widths of the additional pulses AP is larger than the pulse width of the PWM signal before or after the mask period.

When the sum of the pulse widths of the additional pulses AP during the mask period exceeds a predetermined upper limit width, the value of the sum is preferably divided to generate multiple additional pulses AP during the mask period. In other words, when the sum of the pulse widths of the pulses that would have been generated by PWM control during the mask period is larger than the upper limit value, the pulse widths of the PWM pulses that would have been generated during the mask period are divided by multiple additional pulses AP. The upper limit value is, for example, a duty ratio of 100% at the carrier frequency (PWM carrier frequency, PWM cycle). This allows the torque to be corrected and a decrease in smoothness of the rotation of the motor 80 to be suppressed.

For example, when five PWM pulses that would have been generated in the mask period are assumed to be five pulses with a duty ratio of 17%, 19%, 19%, 20%, and 20%, the sum would be 17 + 19 + 19 + 20 + 20 = 95%. Because this is a duty ratio of 100% or less, an additional pulse AP with a duty ratio of 95% is generated during the mask period.

For example, when PWM pulses that would have been generated in the mask period are assumed to be seven pulses with a duty ratio of 17%, 19%, 19%, 20%, 20%, 21%, and 22%, the sum would be 17 + 19 + 19 + 20 + 20 + 21 + 22 = 137%. Because this total is greater than a duty ratio of 100%, one additional pulse AP with a duty ratio of 100% and one additional pulse AP with a duty ratio of 37% (two additional pulses AP in total) are generated during the mask period. Such division into multiple additional pulses AP is not limited to a case where one pulse has a duty ratio of 100%. Arbitrary division in which, for example, two additional pulses AP with a duty ratio of 68% and 69% are generated may also be employed.

### Flow of Control

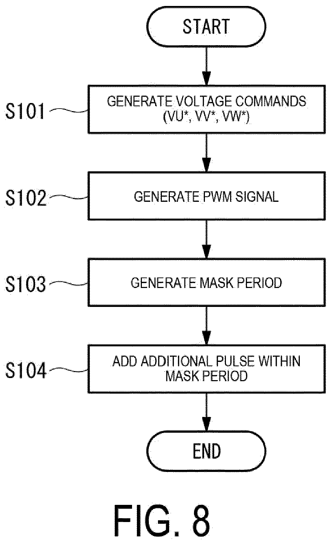

Next, an example of PWM signal generation processing by the control device 10 will be described with reference to FIG. 8. FIG. 8 is a flowchart illustrating an example of a procedure for PWM signal generation processing according to the present embodiment.

First, voltage commands vu*, vv*, and vw* are generated using the speed command for the motor 80 (S101). Then, a PWM signal is generated on the basis of the voltage commands vu*, vv*, and vw* (S102). Next, a mask period is generated for the generated PWM signal (S103). Next, additional pulses AP are added during the mask period (S104). Thus, the mask period and the additional pulses AP during the mask period are generated, and the switching element group 21 is switched by this signal.

### Hardware Configuration Diagram of Control Device

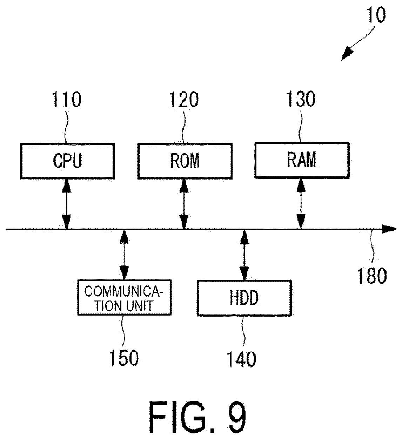

FIG. 9 is a diagram illustrating an example of a hardware configuration of the control device 10 according to the present embodiment.

As illustrated in FIG. 9, the control device 10 is a computer system (calculator system) including, for example, a CPU 110, a read-only memory (ROM) 120 for storing programs or the like executed by the CPU 110, a random-access memory (ROM) 130 that functions as a work area when executing each program, a hard disk drive (HDD) 140 serving as a mass storage device, and a communication unit 150 for connecting to a network or the like. A solid-state drive (SSD) may be used as the mass storage device. These components are connected via bus 180.

The control device 10 may also include an input unit consisting of a keyboard, a mouse, or the like, and a display unit consisting of a liquid crystal display device or the like for displaying data.

Note that the storage medium for storing programs or the like executed by the CPU 110 is not limited to the ROM 120. For example, the storage medium may be another auxiliary storage device such as a magnetic disk, a magneto-optical disk, or a semiconductor memory.

A series of processing steps to achieve the various functions described above are recorded in the hard disk drive 140 or the like in the form of a program, which is read by the CPU 110 into a RAM 130 or the like to process and compute the information. As a result, the various functions described above are achieved. The program may be pre-installed in the ROM 120 or another storage media, stored and provided in a computer-readable storage medium, or delivered via wired or wireless communication means. The computer-readable storage medium includes a magnetic disk, a magneto-optical disk, a CD-ROM, a DVD-ROM, and a semiconductor memory.

### Modified Example

In the above example, a mask period is provided for the PWM signal output from the PWM generation unit 22, and the additional pulse AP is added during the mask period. However, the voltage command input to the PWM generation unit 22 may be processed to output, from the PWM generation unit 22, a signal including a mask period and additional pulses AP.

Thus, the processing of adding the additional pulse AP to the mask period can be performed either before or after the PWM signal is generated.

As described above, with the operation control system and the air conditioner, the operation control method, and the operation control program according to the present embodiment, in the voltage commands on the basis of the speed command for the motor 80, the mask range is the angular range including the electrical angle at which the voltage becomes 0 (i.e., near the zero crossing). During periods other than the mask period, the PWM signal is generated on the basis of the voltage commands, and during the mask period, the additional pulse AP is generated in at least one of the former-stage period and the latter-stage period. With this configuration, switching losses can be reduced by setting the mask period, and the waveform distortion can be reduced during the mask period to suppress torque shock because the additional pulse AP is generated in the former-stage period and/or the latter-stage period. In other words, required torque of the motor 80 during the mask period can be supplemented by the additional pulse AP, and the motor 80 can be smoothly driven. For example, by generating the additional pulse AP in the former-stage period, motor torque at the timing of switching to the mask period can be supplemented, and by generating the additional pulse AP in the latter-stage period, motor torque at the timing of switching from the mask period can be supplemented. This is expected to reduce vibration, noise, and step-out.

Compared to a case of simply shortening the mask period, it is possible to ensure a period during which the switching is stopped while effectively compensating torque.

By making the sum of the pulse widths of the additional pulses AP larger than the pulse width of the PWM signal before or after the mask period, a shortage of motor torque during the mask period can be effectively compensated.

By making the sum of the pulse widths of the additional pulses AP equal to the sum of the widths of the individual pulses of the PWM signals formed during the mask period on the basis of the voltage commands, a shortage of motor torque during the mask period can be effectively compensated.

When the sum of the pulse widths of the additional pulses AP exceeds a predetermined upper limit width (e.g., a duty rate of 100%), the value of the sum can be divided to generate multiple additional pulses AP such that the motor 80 smoothly rotates.

The present disclosure is not limited to the above-described embodiment, and various modifications can be made within the scope of the invention.

### Reference Signs List

1 Inverter device
10 Control device
11 Speed control unit
12 Current control unit
13 Two-phase/three-phase conversion unit
20 Inverter main circuit
21 Switching element group
22 PWM generation unit
30 Motor current detecting unit
61 Mask period generation unit
62 Pulse addition unit
63 Mask period command unit
64 Pulse addition command unit
71 Command generation unit
72 Pulse generation unit
80 Motor
110 CPU
120 ROM
130 RAM
140 Hard disk drive
150 Communication unit
180 Bus
AP Additional pulse

## Claims

1. An operation control system comprising:
a voltage command unit (12, 13) configured to generate sine wave voltage commands (vu*, vv*, vw*) on the basis of a speed command for an AC motor (80);
a command generation unit (71) configured to, by using a predetermined angular range that includes an electrical angle at which the amplitude in the voltage commands (vu*, vv*, vw*) is zero as a mask period (M1); and
a pulse generation unit (72) configured to generate a pulse signal for a switching element that drives the AC motor (80) on the basis of the command generated by the command generation unit (71),
the command generation unit (71) is configured to generate a command to generate a pulse-width modulation signal for the AC motor (80) on the basis of the voltage commands (vu*, vv*, vw*) during periods other than the mask period (M1);
the operation control system being **characterized in that**, the command generation unit (71) is configured to generate a command to generate, when the mask period (M1) is divided into a former-stage period and a latter-stage period, an additional pulse (AP) in at least one of the former-stage period and the latter-stage period.

2. The operation control system according to claim 1, wherein
the command generation unit (71) is configured to generate the command in a manner to generate a pulse-width modulation signal whose amplitude is made zero in the mask period on the basis of the voltage commands (vu*, vv*, vw*) and then to generate the additional pulse (AP) in the mask period (M1).

3. The operation control system according to claim 1 or 2, wherein
in the mask period (M1), one or more of the additional pulses (AP) are generated, and the sum of the pulse widths of the additional pulses (AP) is greater than the pulse width of the pulse-width modulation signal before or after the mask period (M1).

4. The operation control system according to claim 3, wherein
the sum of the pulse widths of the additional pulses (AP) is equal to the sum of the widths of individual pulses of the pulse-width modulation signals formed during the mask period (M1) on the basis of the voltage commands (vu*, vv*, vw*).

5. The operation control system according to claim 3 or 4, wherein
when the sum of the pulse widths of the additional pulses (AP) in the mask period (M1) exceeds a predetermined upper limit width, the command generation unit (71) is configured to generate the command in a manner to divide the value of the sum to generate multiple additional pulses (AP) in the mask period (M1).

6. An air conditioner comprising:
an operation control system according to any one of claims 1 to 5;
a plurality of switching elements (21) configured to be driven on the basis of signals generated by the operation control system; and
an AC motor (80) configured to be driven via an AC voltage generated by the plurality of switching elements (21).

7. An operation control method comprising:
generating sine wave voltage commands (vu*, vv*, vw*) on the basis of a speed command for an AC motor (80);
generating, by using a predetermined angular range that includes an electrical angle at which the amplitude in the voltage commands (vu*, vv*, vw*) is zero as a mask period (M1), a command to:
generate a pulse-width modulation signal for the AC motor (80) on the basis of the voltage commands (vu*, vv*, vw*) during periods other than the mask period (M1); and
generate a pulse signal for a switching element configured to drive the AC motor (80) on the basis of the command generated by using the predetermined angular range as the mask period (M1):
**characterized by** commanding to:
generate, when the mask period (M1) is divided into a former-stage period and a latter-stage period, an additional pulse (AP) in at least one of the former-stage period and the latter-stage period.

8. An operation control program configured to cause a computer to execute:
a step of generating sine wave voltage commands (vu*, vv*, vw*) on the basis of a speed command for an AC motor (80);
a step of generating, by using a predetermined angular range that includes an electrical angle at which the amplitude in the voltage commands (vu*, vv*, vw*) is zero as a mask period (M1), a command:
to generate a pulse-width modulation signal for the AC motor (80) on the basis of the voltage commands (vu*, vv*, vw*) during periods other than the mask period (M1);
to generate a pulse signal for a switching element configured to drive the AC motor (80) on the basis of the command generated by using the predetermined angular range as the mask period (M1):
**characterized by** commanding
to generate, when the mask period (M1) is divided into a former-stage period and a latter-stage period, an additional pulse (AP) in at least one of the former-stage period and the latter-stage period.

## Patentansprüche

1. Betriebssteuerungssystem, umfassend:
eine Spannungssteuerungseinheit (12, 13), die dazu konfiguriert ist, Sinuswellenspannungsbefehle (vu*, vv*, vw*) basierend auf einem Drehzahlbefehl für einen Wechselstrommotor (80) zu erzeugen;
eine Befehlserzeugungseinheit (71), die dazu konfiguriert ist, einen vorbestimmten Winkelbereich, der einen elektrischen Winkel umfasst, in dem die Amplitude in den Spannungsbefehlen (vu*, vv*, vw*) gleich null ist, als Maskierungsperiode (M1) zu verwenden; und
eine Impulserzeugungseinheit (72), die dazu konfiguriert ist, ein Impulssignal für ein Schaltelement, das den Wechselstrommotor (80) ansteuert, basierend auf dem Befehl, der von der Befehlserzeugungseinheit (71) erzeugt wird, zu erzeugen,
wobei die Befehlserzeugungseinheit (71) dazu konfiguriert ist, einen Befehl zu erzeugen, um ein Impulsbreitenmodulationssignal für den Wechselstrommotor (80) basierend auf den Spannungsbefehlen (vu*, vv*, vw*) während anderer Perioden als der Maskierungsperiode (M1) zu erzeugen;
wobei das Betriebssteuerungssystem **dadurch gekennzeichnet ist, dass** die Befehlserzeugungseinheit (71) dazu konfiguriert ist, einen Befehl zu erzeugen, um, wenn die Maskierungsperiode (M1) in eine frühere Periode und eine spätere Periode unterteilt ist, einen zusätzlichen Impuls (AP) in mindestens einer von der früheren Periode und der späteren Periode zu erzeugen.

2. Betriebssteuerungssystem nach Anspruch 1, wobei
die Befehlserzeugungseinheit (71) dazu konfiguriert ist, den Befehl derart zu erzeugen, dass ein Impulsbreitenmodulationssignal, dessen Amplitude in der Maskierungsperiode auf null gesetzt wird, basierend auf den Spannungsbefehlen (vu*, vv*, vw*) erzeugt wird, und dann der zusätzliche Impuls (AP) in der Maskierungsperiode (M1) erzeugt wird.

3. Betriebssteuerungssystem nach Anspruch 1 oder 2, wobei
in der Maskierungsperiode (M1) einer oder mehrere der zusätzlichen Impulse (AP) erzeugt werden, und die Summe der Impulsbreiten der zusätzlichen Impulse (AP) größer als die Impulsbreite des Impulsbreitenmodulationssignals vor oder nach der Maskierungsperiode (M1) ist.

4. Betriebssteuerungssystem nach Anspruch 3, wobei
die Summe der Impulsbreiten der zusätzlichen Impulse (AP) gleich der Summe der Breiten von einzelnen Impulsen der Impulsbreitenmodulationssignale ist, die während der Maskierungsperiode (M1) basierend auf den Spannungsbefehlen (vu*, vv*, vw*) gebildet werden.

5. Betriebssteuerungssystem nach Anspruch 3 oder 4, wobei
wenn die Summe der Impulsbreiten der zusätzlichen Impulse (AP) in der Maskierungsperiode (M1) eine vorbestimmte obere Grenzbreite überschreitet, die Befehlserzeugungseinheit (71) dazu konfiguriert ist, den Befehl derart zu erzeugen, dass der Wert der Summe geteilt wird, um mehrere zusätzliche Impulse (AP) in der Maskierungsperiode (M1) zu erzeugen.

6. Klimaanlage, umfassend:
ein Betriebssteuerungssystem nach einem der Ansprüche 1 bis 5;
eine Vielzahl von Schaltelementen (21), die dazu konfiguriert sind, basierend auf Signalen, die von dem Betriebssteuerungssystem erzeugt werden, angesteuert zu werden; und
einen Wechselstrommotor (80), der dazu konfiguriert ist, über eine Wechselstromspannung, die von der Vielzahl von Schaltelementen (21) erzeugt wird, angesteuert zu werden.

7. Betriebssteuerungsverfahren, umfassend:
Erzeugen von Sinuswellenspannungsbefehlen (vu*, vv*, vw*) basierend auf einem Drehzahlbefehl für einen Wechselstrommotor (80);
Erzeugen, unter Verwendung eines vorbestimmten Winkelbereichs, der einen elektrischen Winkel umfasst, in dem die Amplitude in den Spannungsbefehlen (vu*, vv*, vw*) gleich null ist, als Maskierungsperiode (M1), eines Befehls zum:
Erzeugen eines Impulsbreitenmodulationssignals für den Wechselstrommotor (80) basierend auf den Spannungsbefehlen (vu*, vv*, vw*) während anderer Perioden als der Maskierungsperiode (M1); und
Erzeugen eines Impulssignals für ein Schaltelement, das dazu konfiguriert ist, den Wechselstrommotor (80) anzusteuern, basierend auf dem Befehl, der unter Verwendung des vorbestimmten Winkelbereichs als Maskierungsperiode (M1) erzeugt wird;
**gekennzeichnet durch** das Befehlen zum:
Erzeugen, wenn die Maskierungsperiode (M1) in eine frühere Periode und eine spätere Periode unterteilt wird, eines zusätzlichen Impulses (AP) in mindestens einer von der früheren Periode und der späteren Periode.

8. Betriebssteuerungsprogramm, das dazu konfiguriert ist, einen Computer zum Ausführen zu veranlassen von:
einem Schritt des Erzeugens von Sinuswellenspannungsbefehlen (vu*, vv*, vw*) basierend auf einem Drehzahlbefehl für einen Wechselstrommotor (80);
einem Schritt des Erzeugens, unter Verwendung eines vorbestimmten Winkelbereichs, der einen elektrischen Winkel umfasst, in dem Amplitude in den Spannungsbefehlen (vu*, vv*, vw*) gleich null ist, als Maskierungsperiode (M1), eines Befehls zum:
Erzeugen eines Impulsbreitenmodulationssignals für den Wechselstrommotor (80) basierend auf den Spannungsbefehlen (vu*, vv*, vw*) während anderer Perioden als der Maskierungsperiode (M1);
Erzeugen eines Impulssignals für ein Schaltelement, das dazu konfiguriert ist, den Wechselstrommotor (80) anzusteuern, basierend auf dem Befehl, der unter Verwendung des vorbestimmten Winkelbereichs als Maskierungsperiode (M1) erzeugt wird;
**gekennzeichnet durch** das Befehlen zum:
Erzeugen, wenn die Maskierungsperiode (M1) in eine frühere Periode und eine spätere Periode unterteilt wird, eines zusätzlichen Impulses (AP) in mindestens einer von der früheren Periode und der späteren Periode.

## Revendications

1. Système de commande de fonctionnement comprenant :
une unité d'instruction de tension (12, 13) configurée pour générer des instructions de tension (vu*, vv*, vw*) d'onde sinusoïdale sur la base d'une instruction de vitesse pour un moteur CA [courant alternatif] (80) ;
une unité de génération d'instructions (71) configurée pour, en utilisant comme période de masque (M1) une plage angulaire prédéterminée qui comporte un angle électrique auquel l'amplitude dans les instructions de tension (vu*, vv*, vw*) est nulle ; et
une unité de génération d'impulsions (72) configurée pour générer un signal d'impulsion pour un élément de commutation qui entraîne le moteur CA (80) sur la base de l'instruction générée par l'unité de génération d'instructions (71),
l'unité de génération d'instructions (71) est configurée pour générer une instruction de générer un signal de modulation de largeur d'impulsion pour le moteur CA (80) sur la base des instructions de tension (vu*, vv*, vw*) pendant des périodes autres que la période de masque (M1) ;
le système de commande de fonctionnement étant **caractérisé en ce que** l'unité de génération d'instructions (71) est configurée pour générer, lorsque la période de masque (M1) est divisée en une période de stade antérieur et une période de stade postérieur, l'instruction de générer une impulsion supplémentaire (AP) dans au moins une parmi la période de stade antérieur et la période de stade postérieur.

2. Système de commande de fonctionnement selon la revendication 1, dans lequel
l'unité de génération d'instructions (71) est configurée pour générer l'instruction de manière à générer un signal de modulation de largeur d'impulsion dont l'amplitude est ramenée à zéro dans la période de masque sur la base des instructions de tension (vu*, vv*, vw*), puis pour générer l'impulsion supplémentaire (AP) dans la période de masque (M1).

3. Système de commande de fonctionnement selon la revendication 1 ou 2, dans lequel,
dans la période de masque (M1), une ou plusieurs des impulsions supplémentaires (AP) sont générées, et la somme des largeurs d'impulsion des impulsions supplémentaires (AP) est supérieure à la largeur d'impulsion du signal de modulation de largeur d'impulsion avant ou après la période de masque (M1).

4. Système de commande de fonctionnement selon la revendication 3, dans lequel
la somme des largeurs d'impulsion des impulsions supplémentaires (AP) est égale à la somme des largeurs d'impulsions individuelles des signaux de modulation de largeur d'impulsion formés pendant la période de masque (M1) sur la base des instructions de tension (vu*, vv*, vw*).

5. Système de commande de fonctionnement selon la revendication 3 ou 4, dans lequel
lorsque la somme des largeurs d'impulsion des impulsions supplémentaires (AP) dans la période de masque (M1) dépasse une largeur de limite supérieure prédéterminée, l'unité de génération d'instructions (71) est configurée pour générer l'instruction de manière à diviser la valeur de la somme pour générer de multiples impulsions supplémentaires (AP) dans la période de masque (M1).

6. Climatiseur comprenant :
un système de commande de fonctionnement selon l'une quelconque des revendications 1 à 5 ;
une pluralité d'éléments de commutation (21) configurés pour être entraînés sur la base de signaux générés par le système de commande de fonctionnement ; et
un moteur CA (80) configuré pour être entraîné via une tension CA générée par la pluralité d'éléments de commutation (21).

7. Procédé de commande de fonctionnement comprenant les étapes suivantes :
générer des instructions de tension (vu*, vv*, vw*) d'onde sinusoïdale sur la base d'une instruction de vitesse pour un moteur CA (80) ;
en utilisant comme période de masque (M1) une plage angulaire prédéterminée qui comporte un angle électrique auquel l'amplitude dans les instructions de tension (vu*, vv*, vw*) est nulle, générer une instruction :
de générer un signal de modulation de largeur d'impulsion pour le moteur CA (80) sur la base des instructions de tension (vu*, vv*, vw*) pendant des périodes autres que la période de masque (M1) ; et
de générer un signal d'impulsion pour un élément de commutation configuré pour entraîner le moteur CA (80) sur la base de l'instruction générée en utilisant la plage angulaire prédéterminée comme période de masque (M1) :
**caractérisé par** l'instruction suivante :
lorsque la période de masque (M1) est divisée en une période de stade antérieur et une période de stade postérieur, générer une impulsion supplémentaire (AP) dans au moins une parmi la période de stade antérieur et la période de stade postérieur.

8. Programme de commande de fonctionnement configuré pour amener un ordinateur à exécuter :
une étape de génération d'instructions de tension (vu*, vv*, vw*) d'onde sinusoïdale sur la base d'une instruction de vitesse pour un moteur CA (80) ;
en utilisant comme période de masque (M1) une plage angulaire prédéterminée qui comporte un angle électrique auquel l'amplitude dans les instructions de tension (vu*, vv*, vw*) est nulle, une étape de génération d'une instruction :
de générer un signal de modulation de largeur d'impulsion pour le moteur CA (80) sur la base des instructions de tension (vu*, vv*, vw*) pendant des périodes autres que la période de masque (M1) ;
de générer un signal d'impulsion pour un élément de commutation configuré pour entraîner le moteur CA (80) sur la base de l'instruction générée en utilisant la plage angulaire prédéterminée comme période de masque (M1) :
**caractérisé par** l'instruction suivante :
lorsque la période de masque (M1) est divisée en une période de stade antérieur et une période de stade postérieur, générer une impulsion supplémentaire (AP) dans au moins une parmi la période de stade antérieur et la période de stade postérieur.
